# FASCICULE DE BREVET EUROPEEN

(11) **EP 3 894 926 B1**
(45) Date de publication et mention de la délivrance du brevet: **25.01.2023**
(21) Numéro de dépôt: 19813354.8
(22) Date de dépôt: 09.12.2019
(51) Int. Cl.: G02B 19/00, G02B 27/10, G02B 27/14, G02B 27/62

(54) **DISPOSITIF D'HARMONISATION MULTI-SPECTRAL DESTINE A ALIGNER LES VOIES OPTIQUES D'UN SYSTEME OPTRONIQUE**
MULTISPEKTRALE HARMONISIERUNGSVORRICHTUNG ZUM AUSRICHTEN DER OPTISCHEN WEGE EINES OPTRONISCHEN SYSTEMS
MULTISPECTRAL HARMONIZATION DEVICE DESIGNED TO ALIGN THE OPTICAL PATHS OF AN OPTRONIC SYSTEM

(30) Priorité: 11.12.2018 FR 1872709
(43) Date de publication de la demande: 20.10.2021
(73) Titulaire: SAFRAN ELECTRONICS & DEFENSE, 75015 Paris (FR)
(72) Inventeur: DAVENEL, Arnaud, 92100 BOULOGNE BILLANCOURT (FR)
(74) Mandataire: Cabinet Le Guen Maillet
(86) Numéro de dépôt international: PCT/EP2019/084145
(87) Numéro de publication internationale: WO 2020/120362

(56) Documents cités:
- FR-A1- 2 601 148
- FR-A2- 2 647 557

## Description

### DOMAINE TECHNIQUE

La présente invention concerne des dispositifs d'harmonisation de voies optiques dans différentes bandes spectrales destinés à être utilisés pour le réglage de systèmes optroniques et de détecteurs multi-spectraux.

### ETAT DE LA TECHNIQUE ANTERIEURE

Un système optronique est constitué de plusieurs appareils de détection tels que des capteurs, viseurs ou imageurs, chacun de ces appareils de détection fonctionnant dans une bande spectrale qui lui est spécifique. Pour qu'un système optronique soit performant, il est nécessaire d'aligner précisément les voies optiques de ces différents appareils de détection les unes par rapport aux autres. Le réglage d'un système optronique consiste à harmoniser ses différentes voies optiques, autrement dit à ajuster leur orientation angulaire et à contrôler leur parallélisme.

Un dispositif d'harmonisation de système optronique comporte habituellement plusieurs faisceaux optiques, chacun de ces faisceaux émettant à une longueur d'onde spécifique. Ces différents faisceaux sont orientés précisément les uns par rapport aux autres grâce à des systèmes de métrologie optique montés sur des bancs de test.

L'harmonisation des différentes voies d'un système optronique doit être effectuée périodiquement car l'alignement de voies optiques d'un tel système présente une stabilité limitée dans le temps qui est généralement plus brève que la durée de vie du système optronique.

Un problème posé pour l'harmonisation des systèmes optroniques concerne les opérations de maintenance dans des environnements de terrain, par exemple lorsque l'un des appareils de détection du système optronique doit être changé. Les dispositifs d'harmonisation utilisés habituellement présentent des contraintes d'alignement qui ne peuvent pas être remplies dans des environnements non normalisés que sont les conditions de terrain.

Certains dispositifs d'harmonisation moins contraints s'appuient sur le recouvrement spectral de différents détecteurs. Cela permet, à partir d'un même faisceau optique, détectable dans les bandes spectrales de plusieurs appareils, de contrôler l'orientation des voies de ces appareils. Cependant, ce dispositif ne permet pas de régler simultanément plusieurs voies optiques dans des bandes spectrales éloignées sauf dans certains cas particuliers et au prix d'une dégradation des performances des appareils.

Il est souhaitable de fournir une solution qui simplifie l'harmonisation des voies optiques d'un système optronique dans différentes bandes spectrales et notamment dans des environnements non normalisés. En particulier, il est souhaitable de fournir une solution qui soit utilisable sur le terrain et qui soit facile d'utilisation tout en conservant une précision suffisante pour la performance des systèmes optroniques.

Il est également souhaitable de fournir une solution permettant de régler simultanément l'ensemble des voies optiques d'un système optronique.

Il est par ailleurs souhaitable de fournir une solution facile à mettre en oeuvre et à faible coût.

On connaît notamment les documents de l'art antérieur FR 2 647 557 et FR 2 601 148.

### EXPOSE DE L'INVENTION

L'invention concerne un dispositif d'harmonisation multi-spectral de systèmes optroniques comportant un faisceau collimaté multi-spectral pour l'alignement de plusieurs voies optiques.

Un objet de la présente invention est de proposer un dispositif d'harmonisation multi-spectral tel que défini dans la revendication 1.

Ainsi, il est possible de régler simultanément plusieurs voies optiques d'un système optronique dans différentes bandes spectrales avec un faisceau collimaté multi-spectral.

Selon l'invention, les moyens de positionnement et d'orientation comportent en outre un masque d'alignement constitué d'une paroi opaque et comportant un trou. Le masque d'alignement est placé dans un plan orthogonal à l'axe optique du miroir parabolique de telle sorte que l'emplacement du trou corresponde au foyer optique du miroir parabolique.

Ainsi, l'emplacement du foyer optique du miroir parabolique est matérialisé par un trou, ce qui permet d'aligner facilement un faisceau optique avec le foyer optique du miroir parabolique en faisant passer ledit faisceau optique par le trou.

Selon un mode particulier de réalisation de l'invention, le trou est centré sur le masque d'alignement et la dimension de la paroi opaque est au moins dix fois supérieure à la dimension dudit trou.

Ainsi, le masque d'alignement permet d'intercepter les faisceaux optiques incidents qui ne passent pas par le trou du masque d'alignement et ne sont donc pas alignés avec le foyer optique du miroir parabolique, ce qui facilite l'alignement des faisceaux optiques avec le foyer optique du miroir parabolique et donc l'ajustement de la position et de l'orientation des sources émettant lesdits faisceaux optiques.

Selon un mode particulier de réalisation de l'invention, des moyens de fixation assemblent de manière amovible le masque d'alignement et le miroir parabolique. Ainsi, il est possible d'utiliser le masque d'alignement uniquement pendant des opérations de positionnement et d'orientation des sources lumineuses.

Selon un mode particulier de réalisation de l'invention, des moyens de fixation assemblent le masque d'alignement et le miroir parabolique de manière permanente et les dimensions extérieures de la paroi opaque sont comprises entre 10 et 30% des dimensions du miroir parabolique.

Ainsi, il est possible de maintenir la position du masque d'alignement par rapport au foyer optique du miroir parabolique à tout moment, ce qui permet d'utiliser le faisceau collimaté multi-spectral à tout moment.

Selon un mode particulier de réalisation de l'invention, la face de la paroi opaque orientée vers les sources optiques est non réfléchissante.

Ainsi, les faisceaux optiques qui ne passent pas par le trou du masque d'alignement ne génèrent pas de faisceaux optiques parasites par réflexion sur ledit masque d'alignement.

Selon un mode particulier de réalisation de l'invention, les moyens de fixation sont réglables.

Ainsi, il est possible d'ajuster la position du trou par rapport au foyer optique du miroir parabolique.

Selon un mode particulier de réalisation de l'invention, le miroir parabolique est divisé en un nombre de secteurs égal au nombre de voies d'un système optronique à harmoniser, chacun desdits secteurs correspond à une bande spectrale et chacun des secteurs est éclairé par au moins un faisceau optique issu d'au moins une source optique de longueur d'onde d'émission appartenant à la bande spectrale du secteur correspondant. Ainsi, à chaque voie optique d'un système optronique correspond un secteur du miroir parabolique dans une bande spectrale spécifique.

L'invention concerne également un système de positionnement tel que défini dans la revendication 8.

Ainsi, le système de positionnement permet de mettre en oeuvre un faisceau collimaté multi-spectral de manière aisée.

L'invention concerne également un procédé de positionnement et d'orientation d'au moins deux sources optiques d'un dispositif d'harmonisation multi-spectral, lesdites sources émettant des faisceaux optiques respectifs de différentes longueurs d'onde appartenant à différentes bandes spectrales. Le procédé de positionnement et d'orientation comporte pour chacune des sources optiques les étapes suivantes : installation d'un détecteur optique sensible à la longueur d'onde d'émission de ladite source optique à positionner et à orienter ; ajustement de la position et de l'orientation de la source optique de manière à ce que le faisceau optique émis par ladite source soit dirigé vers le miroir parabolique et passe par un trou percé dans un masque d'alignement, le trou étant situé au foyer dudit miroir parabolique ; détection, par le détecteur optique sensible à la longueur d'onde d'émission de la source, d'un signal optique à ladite longueur d'onde d'émission de la source, caractéristique du faisceau optique issu de ladite source qui est passé par le trou, et génération d'une information représentative de la détection.

Ainsi, le procédé de positionnement et d'orientation permet d'obtenir un faisceau collimaté multi-spectral de manière aisée.

Selon un mode particulier de réalisation de l'invention, le procédé de positionnement et d'orientation comporte en outre une étape d'installation du masque d'alignement de sorte que le trou dudit masque d'alignement soit situé au foyer du miroir parabolique.

Ainsi, le trou du masque d'alignement matérialise le foyer optique du miroir parabolique.

Selon un mode particulier de réalisation de l'invention, le procédé de positionnement et d'orientation comporte en outre une étape consistant à enlever le détecteur optique sensible à la longueur d'onde d'émission de la source lorsque la position et l'orientation de ladite source optique sont validées.

Ainsi, la position et l'orientation de chaque source sont ajustées avec un détecteur optique adapté à la longueur d'onde d'émission de la source et un détecteur optique ne peut faire obstacle à la détection, par un autre détecteur optique, d'un faisceau optique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un dispositif d'harmonisation multi-spectral comportant un faisceau collimaté multi-spectral ;
[Fig. 2A] illustre schématiquement en vue de face le dispositif d'harmonisation multi-spectral comportant un faisceau collimaté multi-spectral ;
[Fig. 2B] illustre schématiquement en vue de face le dispositif d'harmonisation multi-spectral avec la division en plusieurs secteurs du miroir parabolique ;
[Fig. 3] illustre schématiquement un premier système de positionnement pour la mise en oeuvre du dispositif d'harmonisation multi-spectral ;
[Fig. 4] illustre schématiquement un second système de positionnement pour la mise en oeuvre du dispositif d'harmonisation multi-spectral ;
[Fig. 5] illustre schématiquement un procédé de positionnement et d'orientation des sources pour la mise en oeuvre du dispositif d'harmonisation multi-spectral.

### EXPOSE DETAILLE DE MODES DE REALISATION

La présente invention consiste en un dispositif d'harmonisation de systèmes optroniques comportant un faisceau collimaté multi-spectral.

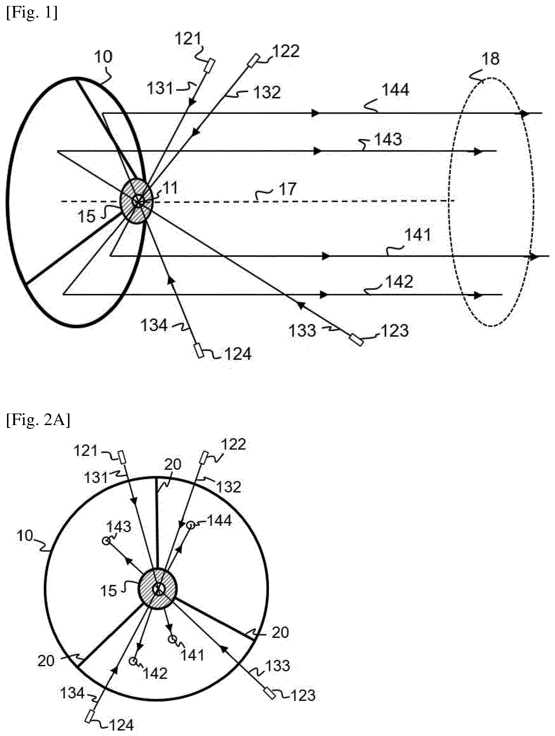

La Fig. 1 illustre schématiquement un dispositif d'harmonisation comportant un faisceau collimaté multi-spectral.

Le dispositif d'harmonisation de systèmes optroniques comporte un miroir parabolique 10 sur lequel viennent se réfléchir des faisceaux optiques incidents 131, 132, 133, 134 issus respectivement de sources 121, 122, 123 et 124. Lesdites sources 121 à 124 sont des sources lumineuses qui émettent des faisceaux optiques directionnels, spatialement et temporellement cohérents, comme par exemple des diodes laser. Les faisceaux optiques incidents 131, 132, 133 et 134 respectivement émis par les sources 121, 122, 123 et 124 sont de différentes longueurs d'onde. Des faisceaux optiques réfléchis 141, 142, 143 et 144 résultent respectivement de la réflexion des faisceaux optiques incidents 131, 132, 133 et 134 sur le miroir parabolique 10. Le dispositif d'harmonisation comporte également des moyens de positionnement et d'orientation permettant de positionner et d'orienter les sources 121 à 124 de telle sorte que les faisceaux optiques incidents 131 à 134 sont émis vers le miroir parabolique 10 dans une direction de propagation qui passe par le foyer optique 11 dudit miroir parabolique 10. La direction de propagation des faisceaux optiques réfléchis 141 à 144 est par conséquent parallèle à l'axe optique 17 du miroir parabolique 10. Les faisceaux optiques réfléchis 141 à 144 sont ainsi parallèles entre eux. En d'autres termes, un faisceau 18 constitué de l'ensemble de ces faisceaux optiques réfléchis 141 à 144 est collimaté.

De plus, les faisceaux optiques réfléchis 141, 142, 143 et 144, issus de la réflexion sur le miroir parabolique 10 des faisceaux optiques incidents 131, 132, 133 et 134 respectifs, présentent des longueurs d'onde différentes qui correspondent respectivement à celles émises par les sources 121, 122, 123 et 124. Les différentes longueurs d'onde peuvent se rapporter à différentes bandes du spectre électromagnétique, par exemple des bandes spectrales du visible et de l'infrarouge. Le faisceau 18 constitué de l'ensemble des faisceaux optiques réfléchis 141 à 144 est appelé faisceau multi-spectral.

Les sources 121 à 124 sont positionnées et orientées par les moyens de positionnement et d'orientation de telle manière que chacun des faisceaux incidents 131 à 134 est dirigé vers le miroir parabolique 10, dans un espace limité par l'ouverture dudit miroir parabolique 10. De plus, les moyens de positionnement et d'orientation permettent de positionner lesdites sources 121 à 124 hors du champ du miroir parabolique 10 à l'extérieur du diamètre dudit miroir parabolique 10. En d'autres termes, les sources se trouvent à l'extérieur de la zone où se propagent les faisceaux optiques réfléchis 141 à 144 de telle sorte que lesdits faisceaux optiques réfléchis 141 à 144 ne sont pas interceptés par l'une des sources 121 à 124.

Les moyens de positionnement et d'orientation comportent un masque d'alignement 15. Le masque d'alignement 15 comporte une paroi opaque et un trou par exemple disposé en son centre est disposé de manière à ce que le trou du masque d'alignement soit au foyer optique 11 du miroir parabolique 10. Le trou du masque d'alignement 15 matérialise l' emplacement du foyer optique 11. Les moyens de positionnement et d'orientation permettent de positionner et d'orienter les sources 121 à 124 de manière à ce que le faisceau optique émis par chaque source passe par le trou du masque d'alignement 15, donc par le foyer optique 11 du miroir parabolique 10. Le masque d'alignement 15 est placé dans un plan orthogonal à l'axe optique 17 du miroir parabolique 10.

Le diamètre du trou du masque d'alignement 15 est variable selon la précision d'alignement recherchée pour le réglage de voies optiques d'un système optronique. La divergence des faisceaux optiques réfléchis 141 à 144 après que les faisceaux optiques incidents 131 à 134 ont traversé le trou du masque d'alignement dépend de l'ouverture apparente du trou et donc de la dimension du trou ainsi que de la distance focale du miroir parabolique 10. La divergence des faisceaux ou dispersion angulaire doit être faible par rapport à la précision recherchée sur l'orientation angulaire. Par exemple, pour des trous de largeur 1% et 0,1% de la distance entre le foyer optique et le centre du miroir parabolique, la divergence à 90% de l'énergie vaut respectivement +/- 0,31° (soit 5,4 mrad) et +/- 0,031 ° (soit 0,55 mrad), ce qui permet d'effectuer un alignement de voies optiques d'un système optronique avec des précisions angulaires de l'ordre de respectivement 1° et 0,1°.

Le masque d'alignement 15 a pour fonction d'intercepter au moins en partie des faisceaux optiques incidents qui ne seraient pas orientés pour passer par le trou du masque d'alignement 15, et ce afin de faciliter l'opération de positionnement et d'orientation des sources 121 à 124 et donc la mise en oeuvre du dispositif d'harmonisation multi-spectral. Pour cela, la paroi du masque d'alignement 15 présente une surface de dimension au moins dix fois supérieure à celle du trou.

Le masque d'alignement 15 peut-être amovible. Il est dans ce cas installé au foyer optique 11 du miroir parabolique 10 lors des opérations de positionnement et d'orientation des sources 121 à124 et retiré ensuite lors de l'utilisation du faisceau 18 collimaté multi-spectral pour le réglage de voies optiques d'un système optronique. Les dimensions extérieures du masque d'alignement 15 peuvent dans ce cas atteindre les dimensions du miroir parabolique 10, ce qui permet de faciliter l'opération de positionnement et d'orientation des sources 121 à 124 et en particulier l'alignement des faisceaux optiques incidents 131 à 134 émis par lesdites sources 121 à 124 avec le foyer optique 11 du miroir parabolique 10 et un point du miroir parabolique 10. Par ailleurs, lorsque ledit masque d'alignement 15 amovible est retiré, la divergence des faisceaux optiques réfléchis 141 à 144 dépend dans ce cas du diamètre des faisceaux optiques.

Le masque d'alignement peut également être fixé au miroir de manière permanente ce qui permet de repérer le foyer optique 11 dudit miroir parabolique 10 à tout moment. Le positionnement et l'orientation des sources pour que les faisceaux optiques incidents 131 à 134 passent par le trou du masque d'alignement 15 peut ainsi s'effectuer facilement, sans recourir à d'autres moyens de réglage. La fixation permanente du masque d'alignement 15 sur le miroir parabolique 10 permet de transporter facilement le dispositif d'harmonisation de systèmes optroniques de la présente invention et de l'utiliser dans différents environnements. Dans ce cas, les dimensions extérieures du masque d'alignement 15 sont suffisamment petites pour que les faisceaux optiques réfléchis 141 à 144 ne soient pas interceptés par le masque d'alignement 15. Par exemple, un masque d'alignement 15 de forme circulaire présente un diamètre extérieur valant 10 à 30% du diamètre du miroir parabolique 10. De plus, la surface du masque d'alignement 15 orientée face aux sources 121 à 124 est préférablement non réfléchissante de manière à éviter des réflexions parasites dans des directions de propagation non maîtrisées.

La Fig. 2A présente en vue de face le dispositif d'harmonisation multi-spectral comportant un faisceau collimaté multi-spectral. Les sources 121, 122, 123 et 124, émettant à différentes longueurs d'onde, sont situées hors du champ du miroir parabolique 10 à l'extérieur du diamètre dudit miroir parabolique 10 et émettent un signal optique en direction dudit miroir parabolique 10 sous forme de faisceaux optiques incidents 131 à 134 dont la direction de propagation passe par le foyer optique 11 dudit miroir parabolique 10, ledit foyer optique 11 étant matérialisé par le trou central du masque d'alignement 15. Les faisceaux optiques incidents 131 à 134 sont ensuite réfléchis par ledit miroir parabolique 10 générant des faisceaux optiques réfléchis 141 à144 parallèles entre eux.

Le masque d'alignement 15 peut être fixé au miroir parabolique 10 à l'aide d'attaches 20. Lesdites attaches 20 de fixation sont préférablement réglables afin de pouvoir ajuster la position du trou par rapport au foyer optique 11 du miroir parabolique 10.

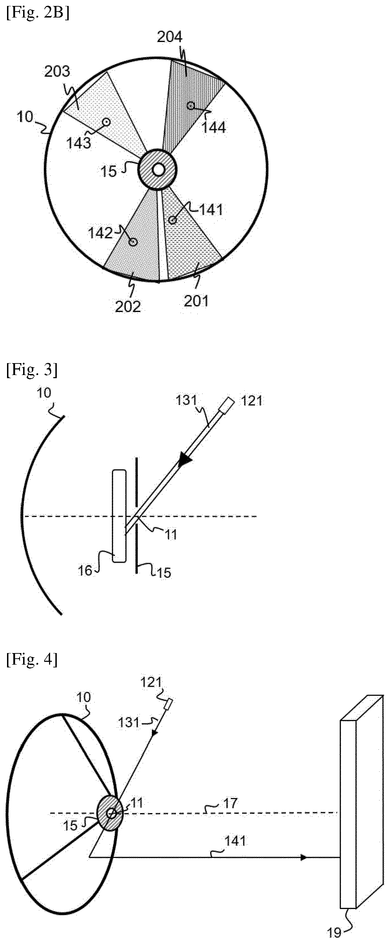

La Fig. 2B illustre schématiquement en vue de face le dispositif d'harmonisation multi-spectral divisé en plusieurs secteurs. Le miroir parabolique 10 est divisé en un nombre de secteurs 201 à 204 défini par le nombre de voies optiques d'un système optronique à harmoniser. Sur chacun de ces secteurs 201 à 204 est réfléchi un ou plusieurs faisceaux optiques incidents dont la ou les longueurs d'onde appartiennent à une même gamme de longueurs d'onde caractéristique de la bande spectrale d'une des voies optiques d'un système optronique. Ainsi, chaque secteur correspond à l'émission d'un ou plusieurs faisceaux optiques réfléchis dans une bande spectrale. Dans l'exemple de la Fig. 2b, le faisceau optique réfléchi 141 de longueur d'onde d'émission de la source 121 est réfléchi sur le secteur 201, de même que les faisceaux optiques réfléchis 142, 143 et 144 de longueurs d'onde d'émission des sources respectives 122, 123 et 124 sont réfléchis sur les secteurs respectifs 202, 203 et 204.

Dans l'exemple des Figs. 1, Fig. 2A et Fig. 2B, quatre sources générant quatre faisceaux optiques incidents et donc quatre faisceaux optiques réfléchis sont représentés. Un nombre plus ou moins important de sources et donc de faisceaux optiques incidents et réfléchis peut bien évidemment être utilisé par la présente invention.

La Fig. 3 illustre en vue de coupe un premier système de positionnement pour la mise en oeuvre du dispositif d'harmonisation multi-spectral.

La mise en oeuvre du faisceau 18 collimaté multi-spectral par le dispositif d'harmonisation multi-spectral de la présente invention implique le positionnement et l'orientation des sources 121 à 124 de telle sorte que les faisceaux optiques émis par lesdites sources passent par le foyer optique 11 du miroir parabolique 10 et permet de contrôler le parallélisme des faisceaux optiques 141 à 144.

Le système de positionnement comporte un détecteur 16 permettant de vérifier la position et l'orientation d'une source 121 et le passage d'un faisceau optique incident 131 par le foyer optique 11 du miroir parabolique 10.Le détecteur 16 sensible à la longueur d'onde émise par la source 121, par exemple un détecteur de flux, est placé entre le masque d'alignement 15 et le miroir parabolique 10 de manière à pouvoir détecter tout faisceau optique incident qui traverse le masque d'alignement 15 en passant par le trou. Le détecteur 16 présente une surface de détection de dimension inférieure à celle du masque d'alignement 15 afin de détecter uniquement les signaux optiques passant par le trou et d'éviter ainsi de détecter des signaux optiques issus d'une source et qui seraient émis en direction du miroir parabolique 10 en passant à l'extérieur du masque d'alignement 15.

La source 121 est positionnée et orientée à l'aide des moyens de positionnement et d'orientation de façon à ce que le faisceau optique incident 131 émis par ladite source 121 soit dirigé vers le trou du masque d'alignement 15 et passe par ledit trou en direction du miroir parabolique 10. Si la source 121 est correctement positionnée, le détecteur 16 détecte, à travers le trou, un signal optique caractéristique du faisceau optique incident 131, par exemple un signal optique à la longueur d'onde d'émission de la source 121. Ledit détecteur 16 génère alors une information représentative de cette détection et donc représentative dudit signal optique détecté caractérisant le passage du faisceau 131 par le trou, ce qui permet de valider la position et l'orientation de la source 121.

Si le détecteur 16 est un détecteur de flux, l'ajustement de la position et de l'orientation de la source 121 est optimisé lorsque le flux détecté est maximal, ce qui correspond à un maximum de flux du faisceau optique incident 131 émis par la source passant à travers le masque d'alignement par le trou dudit masque d'alignement 15. Cette optimisation permet d'ajuster avec précision la position et l'orientation de la source 121.Lorsque le faisceau optique incident 131 ne passe pas par le foyer optique 11 du miroir parabolique 10, il peut être intercepté par le masque d'alignement 15 ou être émis en direction du miroir parabolique 10 à l'extérieur du masque d'alignement 15. Le détecteur 16 ne détecte alors aucun signal optique caractéristique du faisceau optique incident 131, par exemple, aucun signal optique à la longueur d'onde d'émission de la source 121. La position et/ou l'orientation de la source 121 doivent dans ce cas être modifiées jusqu'à ce que le détecteur 16 détecte un signal optique caractéristique du faisceau optique incident 131 et génère alors une information représentative de cette détection qui valide la position et l'orientation de la source.

Lorsque la position et l'orientation d'une première source 121 sont validées, la position et l'orientation d'une seconde source 122 sont ajustées en procédant de la même manière que pour la première source 121 à l'aide d'un détecteur sensible à la longueur d'onde émise par ladite source 122 remplaçant le détecteur 16. Il en est de même pour les sources suivantes.

La Fig. 4 illustre schématiquement un second système de positionnement pour la mise en oeuvre du dispositif d'harmonisation multi-spectral.

Le système de positionnement comporte dans cet exemple un détecteur 19, sensible à la longueur d'onde émise par la source 121, et permettant de vérifier la position et l'orientation d'une source 121. Le détecteur 19 est orienté en direction du miroir parabolique 10 et positionné à l'opposé dudit miroir parabolique 10 par rapport au masque d'alignement 15. Le détecteur 19 est préférablement placé dans un plan orthogonal à l'axe optique et centré sur l'axe optique 17. Lorsque le faisceau optique incident 131 émis par la source 121 passe par le trou du masque d'alignement 15 et donc par le foyer optique 11, le faisceau optique réfléchi 141 se propage parallèlement à l'axe optique 17 et est détecté par le détecteur 19. Ledit détecteur 19 génère alors une information représentative dudit signal optique détecté permettant de valider la position et l'orientation de la source 121.

La surface de détection du détecteur 19 est au moins égale à l'ouverture du miroir parabolique 10 de telle sorte que tout faisceau optique réfléchi par le miroir parabolique 10 parallèlement à l'axe optique 17 soit effectivement détecté par le détecteur 19.

Si le détecteur 19 présente une surface supérieure à l'ouverture du miroir parabolique 10, il est nécessaire de s'assurer en outre qu'un faisceau optique réfléchi par le miroir parabolique 10 dans une direction non parallèle à l'axe optique 17 ne puisse être détecté par le détecteur 19, par exemple en éloignant suffisamment le détecteur 19 du miroir parabolique 10. La distance minimale entre le foyer optique 11 et le détecteur 19 dépend du diamètre extérieur du masque d'alignement 15, des dimensions du détecteur 19 et de la distance focale du miroir parabolique 10. Cette distance permet d'éviter qu'un faisceau optique incident émis par une source en direction du miroir parabolique 10 mais passant à l'extérieur du masque d'alignement 15 soit détecté par le détecteur 19 et entraîne une validation erronée du positionnement de la source 121.

Lorsque la position et l'orientation d'une première source 121 sont validées, la position et l'orientation d'une seconde source 122 sont ajustées en procédant de la même manière que pour la première source 121 à l'aide d'un détecteur sensible à la longueur d'onde émise par ladite source 122 qui remplace le détecteur 19. Il en est de même pour les sources suivantes.

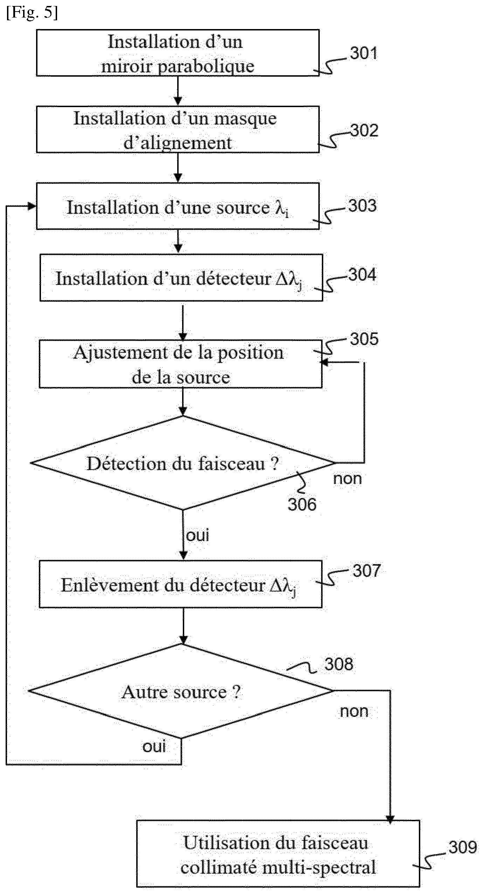

La Fig. 5 illustre schématiquement un procédé de positionnement et d'orientation des sources pour la mise en oeuvre du dispositif d'harmonisation multi-spectral.

Dans une étape 301, le miroir parabolique 10 est installé. Dans une étape 302, le masque d'alignement 15 est positionné par rapport au miroir parabolique 10 de manière à ce que le trou du masque d'alignement 15 coïncide avec le foyer optique 11 du miroir parabolique 10.

Dans une étape 303, une source émettant un faisceau de longueur d'onde λᵢ, par exemple la source 121 émettant à la longueur d'onde λ₁, est installée hors du champ du miroir parabolique 10 de telle manière que le faisceau optique émis par ladite source soit dirigé vers le miroir parabolique 10. Dans une étape 304, un détecteur, de bande spectrale Δλⱼ incluant la longueur d'onde λᵢ émise par la source à aligner, est positionné de manière à détecter à travers le trou du masque d'alignement 15 un signal optique correspondant à un faisceau optique issu de ladite source. Par exemple, le détecteur 16 de bande spectrale Δλ₁₀ incluant la longueur d'onde λ₁ émise par la source 121 est placé entre le masque d'alignement 15 et le miroir parabolique 10 de manière à pouvoir détecter un faisceau optique incident 131. Un autre exemple consiste à installer le détecteur 19 de bande spectrale Δλ₁₁ face au miroir parabolique 10 de manière à pouvoir détecter un faisceau optique réfléchi 141 de longueur d'onde λ₁ issu de la source 121.

Dans une étape 305, la position et l'orientation de la source sont ajustées par rapport à l'ensemble constitué par le miroir parabolique 10 et le masque d'alignement 15 de manière à ce que le faisceau optique émis par ladite source, par exemple le faisceau optique incident 131 émis par la source 121, passe par le trou du masque d'alignement 15.

Dans une étape 306, la position et l'orientation de la source par rapport au masque d'alignement 15 sont contrôlées. Si la position et l'orientation sont correctes, le détecteur de bande spectrale Δλⱼ détecte un signal optique de longueur d'onde λᵢ et génère une information représentative de la détection dudit signal optique, ce qui valide le positionnement et l'orientation de la source et entraîne l'exécution d'une étape 307. Si la position ou l'orientation sont incorrectes, le détecteur ne détecte pas de signal optique à la longueur d'onde λᵢ et l'étape 305 est réitérée. Par exemple, si le faisceau optique incident 131 est détecté par le détecteur 16, la position et l'orientation de la source 121 sont validées afin de passer à l'étape 307. Si le détecteur 16 ne détecte pas le faisceau optique incident 131, l'étape 305 est réitérée et la position et l'orientation de la source 121 sont à nouveau ajustées par rapport au masque d'alignement 15 jusqu'à la détection d'un signal optique par le détecteur 16.

Dans un mode de réalisation particulier, l'ajustement de la position et de l'orientation de la source est optimisé grâce à l'utilisation d'un détecteur tel qu'un détecteur de flux. Dans ce cas, la position et l'orientation de la source sont optimisées lorsque le flux détecté est maximal, ce qui correspond à un maximum de flux du faisceau optique incident émis par la source passant à travers le masque d'alignement par le trou dudit masque d'alignement 15.

L'étape 307 consiste à enlever le détecteur de bande spectrale Δλⱼ, comme par exemple le détecteur 16, du système.

Une étape 308 consiste à identifier si la position et l'orientation d'au moins une autre source doivent être ajustées. Si tel est le cas, l'étape 303 est alors répétée, ce qui correspond à l'installation d'une autre source émettant un faisceau de longueur d'onde λᵢ différente, par exemple la source 122 émettant à la longueur d'onde λ₂. Puis les étapes suivantes 304 à 308 sont à leur tour répétées. Si toutes les sources sont correctement positionnées et orientées, la mise en oeuvre du dispositif d'harmonisation multi-spectral est achevée et une étape 309 est effectuée.

Dans l'étape 309, le faisceau 18 collimaté multi-spectral généré par ledit dispositif d'harmonisation multi-spectral peut être utilisé pour effectuer les opérations d'harmonisation d'un système optronique, en particulier pour aligner les différentes voies d'un système optronique dans différentes bandes spectrales.

Dans un mode de réalisation particulier, si la mise en oeuvre du dispositif d'harmonisation multi-spectral implique l'ajustement successif du positionnement et de l'orientation de deux sources 121 et 122 émettant à des longueurs d'onde respectives λ₁ et λ₂ différentes mais toutes deux appartenant à la bande spectrale Δλ₁₂ d'un même détecteur D1, le détecteur D1 utilisé lors de l'ajustement de la position et de l'orientation de la source 121 peut être laissé en place après la validation de la position et de l'orientation de la source 121 : il est alors possible de passer directement de l'étape 306 à l'étape 308. Lors de l'ajustement de la position et de l'orientation de la source 122 et après l'installation de ladite source 122 à l'étape 303, le détecteur D1 étant déjà en place, il n'est alors pas nécessaire de respecter l'étape 304.

## Revendications

1. Dispositif d'harmonisation multi-spectral destiné à aligner les voies optiques d'un système optronique et comportant au moins deux sources optiques (121 à 124) directionnelles émettant des faisceaux optiques respectifs de différentes longueurs d'onde appartenant à différentes bandes spectrales, ledit dispositif d'harmonisation multi-spectral comportant en outre un miroir parabolique (10) et des moyens de positionnement et d'orientation de chacune des sources optiques pour que chacun des faisceaux optiques émis (131 à 134) par lesdites sources optiques passe par le foyer optique (11) du miroir parabolique (10) avant d'être réfléchi par ledit miroir parabolique (10) de sorte que l'ensemble des faisceaux optiques (141 à 144) forme par réflexion sur le miroir parabolique (10) un faisceau collimaté multi-spectral (18), les moyens de positionnement et d'orientation comportant un masque d'alignement (15) constitué d'une paroi opaque et comportant un trou,
le dispositif étant **caractérisé en ce que**
ledit masque d'alignement est placé dans un plan orthogonal à l'axe optique du miroir parabolique de telle sorte que l'emplacement du trou corresponde au foyer optique (11) du miroir parabolique.

2. Dispositif d'harmonisation multi-spectral selon la revendication 1, **caractérisé en ce que** le trou est centré sur le masque d'alignement (15) et **en ce que** la dimension de la paroi opaque est au moins dix fois supérieure à la dimension dudit trou.

3. Dispositif d'harmonisation multi-spectral selon l'une des revendications 1 et 2, **caractérisé en ce que** des moyens de fixation (20) assemblent de manière amovible le masque d'alignement et le miroir parabolique.

4. Dispositif d'harmonisation multi-spectral selon l'une des revendications 1 et 2, **caractérisé en ce que** des moyens de fixation (20) assemblent le masque d'alignement (15) et le miroir parabolique (10) de manière permanente et **en ce que** les dimensions extérieures de la paroi opaque sont comprises entre 10 et 30% des dimensions du miroir parabolique (10).

5. Dispositif d'harmonisation multi-spectral selon la revendication 4, **caractérisé en ce que** la face de la paroi opaque orientée vers les sources optiques (121 à 124) est non réfléchissante.

6. Dispositif d'harmonisation multi-spectral selon l'une quelconque des revendications 3 à 5, **caractérisé en ce que** les moyens de fixation (20) sont réglables.

7. Dispositif d'harmonisation multi-spectral selon l'une quelconque des revendications 1 à 6, **caractérisé en ce que** le miroir parabolique (10) est divisé en un nombre de secteurs (201 à 204) égal au nombre de voies d'un système optronique à harmoniser, chacun desdits secteurs correspond à une bande spectrale, et **en ce que** sur chacun des secteurs est réfléchi au moins un faisceau optique (131 à 134) issu d'au moins une source optique de longueur d'onde d'émission appartenant à la bande spectrale du secteur correspondant.

8. Système de positionnement comportant un dispositif d'harmonisation multi-spectral selon l'une quelconque des revendications 1 à 7, **caractérisé en ce que** les moyens de positionnement et d'orientation comportent en outre des moyens de détection optique (16, 19), chaque moyen de détection optique (16, 19) est sensible à la longueur d'onde d'émission d'une source optique (121 à 124) à positionner et à orienter,
chaque moyen de détection optique (16, 19) détecte un signal optique à la longueur d'onde d'émission de la source optique (121 à 124) si le faisceau optique (131 à 134) émis par ladite source optique (121 à 124) passe par le trou du masque d'alignement (15) et ne détecte pas de signal optique à la longueur d'onde d'émission de la source optique si le faisceau optique (131 à 134) émis par ladite source optique (121 à 124) ne passe pas par le trou du masque d'alignement,
et lorsqu'un signal optique à la longueur d'onde d'émission de la source optique est détecté, ledit moyen de détection optique (16, 19) génère une information représentative de la détection permettant de valider la position et l'orientation de la source optique (121 à 124).

9. Procédé de positionnement et d'orientation d'au moins deux sources optiques d'un dispositif d'harmonisation multi-spectral, lesdites sources émettant des faisceaux optiques respectifs de différentes longueurs d'onde appartenant à différentes bandes spectrales,
**caractérisé en ce que** ledit procédé de positionnement et d'orientation comporte pour chacune des sources optiques (121 à 124), les étapes de :
- installation (304) d'un détecteur optique (16, 19) sensible à la longueur d'onde d'émission de ladite source optique à positionner et à orienter,
- ajustement (305) de la position et de l'orientation de la source optique de manière à ce que le faisceau optique émis par ladite source soit dirigé vers le miroir parabolique (10) et passe par un trou percé dans un masque d'alignement (15), le masque d'alignement (15) étant constitué d'une paroi opaque comportant le trou et étant placé dans un plan orthogonal à l'axe optique du miroir parabolique, le trou étant situé au foyer optique (11) dudit miroir parabolique,
- détection (306), par le détecteur optique (16, 19) sensible à la longueur d'onde d'émission de la source optique (121 à 124), d'un signal optique à ladite longueur d'onde d'émission de la source optique, caractéristique du faisceau optique issu de ladite source optique qui est passé par le trou, et génération d'une information représentative de la détection.

10. Procédé de positionnement et d'orientation selon la revendication 9 **caractérisé en ce qu'**il comporte en outre une étape d'installation (302) du masque d'alignement (15) de sorte que le trou dudit masque d'alignement (15) soit situé au foyer optique (11) du miroir parabolique (10).

11. Procédé de positionnement et d'orientation selon l'une des revendications 9 à 10, **caractérisé en ce qu'**il comporte en outre une étape (307) consistant à enlever le détecteur optique (16, 19) sensible à la longueur d'onde d'émission de la source optique (121 à 124) lorsque le positionnement et l'orientation de ladite source optique (121 à 124) sont validés.

## Patentansprüche

1. Multispektrale Harmonisierungsvorrichtung zum Ausrichten der optischen Wege eines optronischen Systems und mit wenigstens zwei richtungsabhängigen optischen Quellen (121 bis 124), die jeweilige optische Bündel verschiedener Wellenlängen aussenden, die zu verschiedenen Spektralbändern gehören, wobei die multispektrale Harmonisierungsvorrichtung ferner einen Parabolspiegel (10) und Mittel zur Positionierung und Orientierung jeder der optischen Quellen aufweist, damit jedes der von den optischen Quellen ausgesendeten optischen Bündel (131 bis 134) durch den optischen Brennpunkt (11) des Parabolspiegels (10) verläuft, bevor es vom Parabolspiegel (10) reflektiert wird, so dass die Menge der optischen Bündel (141 bis 144) durch Reflexion auf dem Parabolspiegel (10) ein multispektrales kollimiertes Bündel (18) bildet, wobei die Positionierungs- und Orientierungsmittel eine Ausrichtungsmaske (15) aufweisen, die von einer Wand gebildet ist, die lichtundurchlässig ist und ein Loch enthält, wobei die Vorrichtung **dadurch gekennzeichnet ist, dass** die Ausrichtungsmaske in einer Ebene platziert ist, die orthogonal zur optischen Achse des Parabolspiegels verläuft, so dass die Stelle des Lochs dem optischen Brennpunkt (11) des Parabolspiegels entspricht.

2. Multispektrale Harmonisierungsvorrichtung nach Anspruch 1, **dadurch gekennzeichnet, dass** das Loch auf der Ausrichtungsmaske (15) zentriert ist, und dadurch, dass die Abmessung der lichtundurchlässigen Wand wenigstens zehnmal größer als die Abmessung des Lochs ist.

3. Multispektrale Harmonisierungsvorrichtung nach einem der Ansprüche 1 und 2, **dadurch gekennzeichnet, dass** die Befestigungsmittel (20) die Ausrichtungsmaske und den Parabolspiegel lösbar zusammenfügen.

4. Multispektrale Harmonisierungsvorrichtung nach einem der Ansprüche 1 und 2, **dadurch gekennzeichnet, dass** die Befestigungsmittel (20) die Ausrichtungsmaske (15) und den Parabolspiegel (10) dauerhaft zusammenfügen, und dadurch, dass die Außenabmessungen der lichtundurchlässigen Wand zwischen 10 und 30 % der Abmessungen des Parabolspiegels (10) betragen.

5. Multispektrale Harmonisierungsvorrichtung nach Anspruch 4, **dadurch gekennzeichnet, dass** die Seite der lichtundurchlässigen Wand, die zu den optischen Quellen (121 bis 124) hin gewandt ist, nicht reflektierend ist.

6. Multispektrale Harmonisierungsvorrichtung nach einem der Ansprüche 3 bis 5, **dadurch gekennzeichnet, dass** die Befestigungsmittel (20) einstellbar sind.

7. Multispektrale Harmonisierungsvorrichtung nach einem der Ansprüche 1 bis 6, **dadurch gekennzeichnet, dass** der Parabolspiegel (10) in eine Anzahl von Sektoren (201 bis 204) aufgeteilt ist, die gleich der Anzahl von Wegen eines zu harmonisierenden optronischen Systems ist, jeder der Sektoren einem Spektralband entspricht, und dadurch, dass auf jedem der Sektoren wenigstens ein optisches Bündel (131 bis 134) aus wenigstens einer optischen Quelle mit einer Sendewellenlänge, die zum Spektralband des entsprechenden Sektors gehört, reflektiert wird.

8. Positionierungssystem aufweisend eine multispektrale Harmonisierungsvorrichtung nach einem der Ansprüche 1 bis 7, **dadurch gekennzeichnet, dass** die Positionierungs- und Orientierungsmittel ferner optische Detektionsmittel (16, 19) aufweisen, jedes optische Detektionsmittel (16, 19) für die Sendewellenlänge einer zu positionierenden und orientierenden optischen Quelle (121 bis 124) empfindlich ist,
jedes optische Detektionsmittel (16, 19) ein optisches Signal auf der Sendewellenlänge der optischen Quelle (121 bis 124) detektiert, wenn das optische Bündel (131 bis 134), das von der optischen Quelle (121 bis 124) ausgesendet wird, durch das Loch der Ausrichtungsmaske (15) hindurchtritt, und kein optisches Signal auf der Sendewellenlänge der optischen Quelle detektiert, wenn das optische Bündel (131 bis 134), das von der optischen Quelle (121 bis 124) ausgesendet wird, nicht durch das Loch der Ausrichtungsmaske hindurchtritt,
und wenn ein optisches Signal auf der Sendewellenlänge der optischen Quelle detektiert wird, das optische Detektionsmittel (16, 19) eine Information erzeugt, die für die Detektion repräsentativ ist, wodurch die Position und die Orientierung der optischen Quelle (121 bis 124) bestätigt werden kann.

9. Verfahren zur Positionierung und Orientierung von wenigstens zwei optischen Quellen einer multispektralen Harmonisierungsvorrichtung, wobei die Quellen, die jeweilige optische Bündel verschiedener Wellenlängen aussenden, zu verschiedenen Spektralbändern gehören, **dadurch gekennzeichnet, dass** das Positionierungs- und Orientierungsverfahren für jede der optischen Quellen (121 bis 124) die folgenden Schritte aufweist:
- Anbringen (304) eines optischen Detektors (16, 19), der für die Sendewellenlänge der zu positionierenden und orientierenden optischen Quelle empfindlich ist,
- Anpassen (305) der Position und der Orientierung der optischen Quelle, so dass das optische Bündel, das von der Quelle ausgesendet wird, zum Parabolspiegel (10) gelenkt wird und durch ein Loch hindurchtritt, das in eine Ausrichtungsmaske (15) gebohrt ist, wobei die Ausrichtungsmaske (15) von einer lichtundurchlässigen Wand gebildet ist, die das Loch enthält und in einer Ebene platziert ist, die orthogonal zur optischen Achse des Parabolspiegels verläuft, wobei sich das Loch im optischen Brennpunkt (11) des Parabolspiegels befindet,
- Detektieren (306), durch den optischen Detektor (16, 19), der für die Sendewellenlänge der optischen Quelle (121 bis 124) empfindlich ist, eines optischen Signals auf der Sendewellenlänge der optischen Quelle, das für das optische Bündel aus der optischen Quelle, das durch das Loch hindurchgetreten ist, charakteristisch ist, und Erzeugen einer Information, die für die Detektion repräsentativ ist.

10. Positionierungs- und Orientierungsverfahren nach Anspruch 9, **dadurch gekennzeichnet, dass** es ferner einen Schritt des Anbringens (302) der Ausrichtungsmaske (15) aufweist, so dass sich das Loch der Ausrichtungsmaske (15) im optischen Brennpunkt (11) des Parabolspiegels (10) befindet.

11. Positionierungs- und Orientierungsverfahren nach einem der Ansprüche 9 bis 10, **dadurch gekennzeichnet, dass** es ferner einen Schritt (307) aufweist, der darin besteht, den optischen Detektor (16, 19), der für die Sendewellenlänge der optischen Quelle (121 bis 124) empfindlich ist, abzunehmen, wenn die Positionierung und Orientierung der optischen Quelle (121 bis 124) bestätigt sind.

## Claims

1. Multispectral harmonisation device intended to align the optical channels of an optronic system and comprising at least two directional optical sources (121 to 124) emitting respective optical beams of various wavelengths belonging to various spectral bands,
said multispectral harmonisation device further comprising a parabolic mirror (10) and means for positioning and orienting each of the optical sources so that each of the optical beams (131 to 134) emitted by said optical sources passes through the optical focus (11) of the parabolic mirror (10) before being reflected by said parabolic mirror (10) so that all the optical beams (141 to 144) form, by reflection on the parabolic mirror (10), a multispectral collimated beam (18),
the positioning and orientation means comprising an alignment mask (15) consisting of an opaque wall and comprising a hole, the device being **characterised in that** said alignment mask is placed in a plane orthogonal to the optical axis of the parabolic mirror so that the location of the hole corresponds to the optical focus (11) of the parabolic mirror.

2. Multispectral harmonisation device according to claim 1, **characterised in that** the hole is centred on the alignment mask (15) and **in that** the dimension of the opaque wall is at least ten times greater than the dimension of said hole.

3. Multispectral harmonisation device according to one of claims 1 and 2, **characterised in that** attachment means (20) removably assemble the alignment mask and the parabolic mirror.

4. Multispectral harmonisation device according to one of claims 1 and 2, **characterised in that** attachment means (20) assemble the alignment mask (15) and the parabolic mirror (10) permanently and **in that** the external dimensions of the opaque wall lie between 10 and 30% of the dimensions of the parabolic mirror (10).

5. Multispectral harmonisation device according to claim 4, **characterised in that** the face of the opaque wall oriented towards the optical sources (121 to 124) is non-reflective.

6. Multispectral harmonisation device according to any one of claims 3 to 5, **characterised in that** the attachment means (20) are adjustable.

7. Multispectral harmonisation device according to any one of claims 1 to 6, **characterised in that** the parabolic mirror (10) is divided into a number of sectors (201 to 204) equal to the number of channels of an optronic system to be harmonised, each of said sectors corresponds to a spectral band, and **in that** at least one optical beam (131 to 134) is reflected on each of the sectors, coming from at least one optical source with an emission wavelength belonging to the spectral band of the corresponding sector.

8. Positioning system comprising a multispectral harmonisation device according to any one of claims 1 to 7, **characterised in that** the positioning and orientation means further comprise optical detection means (16, 19), each optical detection means (16, 19) is sensitive to the emission wavelength of an optical source (121 to 124) to be positioned and oriented,
each optical detection means (16, 19) detects an optical signal at the emission wavelength of the optical source (121 to 124) if the optical beam (131 to 134) emitted by said optical source (121 to 124) passes through the hole in the alignment mask (15) and does not detect an optical signal at the emission wavelength of the optical source if the optical beam (131 to 134) emitted by said optical source (121 to 124) does not pass through the hole in the alignment mask,
and, when an optical signal at the emission wavelength of the optical source is detected, said optical detection means (16, 19) generates information representing the detection making it possible to validate the position and the orientation of the optical source (121 to 124).

9. Method for positioning and orienting at least two optical sources of a multispectral harmonisation device, said sources emitting respective optical beams of various wavelengths belonging to various spectral bands,
**characterised in that** said positioning and orientation method comprises, for each of the optical sources (121 to 124) , the steps of:
- installing (304) an optical detector (16, 19) sensitive to the emission wavelength of said optical source to be positioned and oriented;
- adjusting (305) the position and the orientation of the optical source so that the optical beam emitted by said source is directed towards the parabolic mirror (10) and passes through a hole pierced in an alignment mask (15), the alignment mask (15) consisting of an opaque wall comprising the hole and being placed in a plane orthogonal to the optical axis of the parabolic mirror, the hole being located at the optical focus (11) of said parabolic mirror;
- detecting (306), by the optical detector (16, 19) sensitive to the emission wavelength of the optical source (121 to 124), an optical signal at said emission wavelength of the optical source, characteristic of the optical beam coming from said optical source that has passed through the hole, and generating information representing the detection.

10. Positioning and orientation method according to claim 9, **characterised in that** it further comprises a step of installing (302) the alignment mask (15) so that the hole in said alignment mask (15) is located at the optical focus (11) of the parabolic mirror (10).

11. Positioning and orientation method according to one of claims 9 to 10, **characterised in that** it further comprises a step (307) consisting in removing the optical detector (16, 19) sensitive to the emission wavelength of the source (121 to 124) when the position and the orientation of said optical source (121 to 124) are validated.
